# EUROPÄISCHE PATENTSCHRIFT

(11) **EP 0 761 365 B1**
(45) Veröffentlichungstag und Bekanntmachung des Hinweises auf die Patenterteilung: **18.10.2000**
(21) Anmeldenummer: 96110971.7
(22) Anmeldetag: 08.07.1996
(51) Int. Cl.: B23K 11/06, B23K 11/30

(54) **Verfahren und Vorrichtung zum Rollnahtschweissen von Behältern**
Method and device for roller seam welding of containers
Procédé et appareil pour le soudage à la molette de récipients

(30) Priorität: 04.09.1995 CH 250295
(43) Veröffentlichungstag der Anmeldung: 12.03.1997
(73) Patentinhaber: ELPATRONIC AG, 8962 Bergdietikon (CH)
(72) Erfinder: Taiana, Peter, 5053 Staffelbach (CH)

(56) Entgegenhaltungen:
- EP-A- 0 278 098
- EP-A- 0 503 292
- EP-A- 0 692 334
- DE-A- 2 812 415
- DE-A- 3 607 272
- DE-C- 376 198
- US-A- 4 525 617

## Beschreibung

Die Erfindung betrifft ein Verfahren zum Rollnahtschweissen von Behälterzargen aus Feinblech, vorzugsweise Weissblech. Ferner betrifft die Erfindung eine Vorrichtung zur Durchführung des Verfahrens.

Mit Feinblechen oder Feinstblechen sind Bleche von ca. 0,1 bis 0,5 mm Dicke gemeint. Diese können verzinnt sein (sog. Weissblech) oder können mit anderen Beschichtungen versehen sein oder können unbeschichtet sein (Schwarzblech). Es ist bekannt, besonders Weissblech-Behälter und insbesondere Dosenzargen, mit überlappender Schweissnaht unter Verwendung einer Kupferdraht-Zwischenelektrode zu schweissen. Dies hat sich bis heute als einziges technisch und wirtschaftlich erfolgreiches Verfahren erwiesen, da die Zinnauflage des Bleches zu einer starken Elektrodenverschmutzung führt, was im industriellen Gebrauch nur mit der sich ständig erneuernden Kupferdrahtelektrode beherrschbar ist.

Es ist auch schon untersucht worden, ob das Rollnahtschweissen bei einer Ueberlappnaht drahtlos mit Wolfram oder Molybdän-Schweissrollen erfolgen kann (Paul Schindele, Untersuchungen zum Schweissverhalten von Wolfram- und Molybdän-Legierungen beim Widerstands-Rollennahtschweissen von elektrolytisch verzinntem Feinstblech, Dissertation an der Technischen Universität München, 1983; Zusammenfassung erschienen in "neue verpackung 5/84"). In die Praxis hat ein solches Verfahren keinen Eingang gefunden.

Beim Schweissen von Rohren aus Stahl ist es bekannt, diese mittels Rollnahtschweissung stumpf zu schweissen, wobei hier Elektrodenrollen aus Kupfer verwendet werden können, da keine Verzinnung vorhanden ist. Die Wanddicke derart geschweisster Stahlrohre beträgt minimal 0,4 mm und es muss über Druckrollen seitlich der Naht eine hohe Kraft auf das Rohr ausgeübt werden (Deutscher Verband für Schweisstechnik e.V., Merkblatt DVS 2911). Für das Schweissen von Zargen aus verzinntem Feinstblech (Dicke z.B. ca. 0,19 mm) bei welchem wesentlich andere Verhältnisse vorliegen und bei welchem im Gegensatz zum Rohr auch keine kontinuierliche Naht erzeugt wird, wurde bisher aus der Technik des Stahlrohrschweissens keine Anregung gewonnen.

Es hat sich aber gezeigt, dass auch Behälterzargen aus Feinblech grundsätzlich stumpf schweissbar sind, wobei es allerdings nicht einfach ist, eine gleichmässig dichte Naht zu erzielen. Herkömmlicherweise wird beim Ueberlappungsschweissen eine gefederte äussere Schweissrolle und eine starr gelagerte innere Schweissrolle verwendet. Beim Stumpfschweissen - welches mit Drahtzwischenelektrode oder drahtlos erfolgen kann - treten dabei Probleme auf, die zu einer Undichtheit der Schweissnaht führen.

Es stellt sich daher die Aufgabe, ein Schweissverfahren und eine Vorrichtung zu schaffen, bei welcher ein Stumpfschweissen von Behälterzargen mit konstanterer Qualität der Schweissung durchführbar ist.

Dies wird erfindungsgemäss bei einem Verfahren gemäß Anspruch 1 bzw. 2 erzielt.

Ueberraschenderweise hat es sich gezeigt, dass beim Stumpfschweissen wesentlich bessere Schweissqualität zu erreichen ist, wenn anstelle der äusseren Schweissrolle (wie in DE-A-3 607 272) - wie dies beim Ueberlappungsschweissen der Fall ist - die innere Schweissrolle beweglich gelagert wird. Die Erklärung für diesen überraschenden Effekt dürfte darin liegen, dass die Stumpfschweissung besonders empfindlich auf die Kräfte ist, die beim schnellen Einschieben der geförderten Zarge zwischen die äussere Rolle und die innere Rolle entstehen. Da beim Stumpfschweissen die innere Rolle nicht stromführend ist und daher besonders massearm ausgestaltet werden kann, bringt deren bewegliche Lagerung eine besonders grosse Reduktion dieser Einschiebekräfte. Obschon die bewegliche Lagerung der in der Zarge befindlichen inneren Rolle für den Fachmann bisher als unnötig und aufgrund des geringen zur Verfügung stehenden Raumes als unerwünscht anzusehen war, schlägt die vorliegende Erfindung diesen Weg ein und erzielt dadurch eine verbesserte Schweissqualität.

Auch beim Schweissen einer Ueberlappnaht kann das neue Verfahren vorteilhaft eingesetzt werden. Dabei kann insbesondere die Schweissqualität am Anfang der jeweiligen Schweissnaht verbessert werden.

Die Vorrichtung zur Durchführung des Verfahrens ist durch die Merkmale des Anspruchs 6 bzw. 7 definiert.

Besonders bevorzugt wird eine Ausgestaltung der inneren Rolle aus Keramik, die besonders massenarm ist. Eine besondere Ausgestaltung ergibt sich mit einer inneren Rolle aus zwei Teilen, die eine gleichmässige Kontaktkraft beidseitig der Stumpfnaht gewährleistet. Vorzugsweise ist weiter die innere Rolle als Kugel ausgebildet.

Weitere besondere Ausführungsarten der Erfindung werden anhand der Zeichnungen näher erläutert. Dabei zeigt
Figur 1 schematisch eine Teilansicht einer Dosenzarge beim Schweissvorgang;
Figur 2 schematisch eine Seitenansicht von äusserer und innerer Schweissrolle;
Figur 3 perspektivisch eine weitere Ausführungsform der inneren Rolle;
Figur 4 eine schematische Frontalansicht einer weiteren Ausführungsform;
Figuren 5a und 5b eine weitere Ausführungsform im Vertikalschnitt und in Seitenansicht;
Figuren 6a und 6b eine weitere Ausführungsform in den beiden Ansichten;
Figuren 7a und 7b eine pneumatisch gelagerte Rolle im Vertikalschnitt und in Seitenansicht;
Figuren 8a und 8b eine zweiteilige Rolle in den beiden Ansichten;
Figuren 9a und 9b eine Ausführungsform mit kugelförmiger Rolle in Vertikalschnittansicht und Seitenansicht; und
Figuren 10a und 10 eine weitere Ausführungsform mit Kugelrolle in den beiden Ansichten.

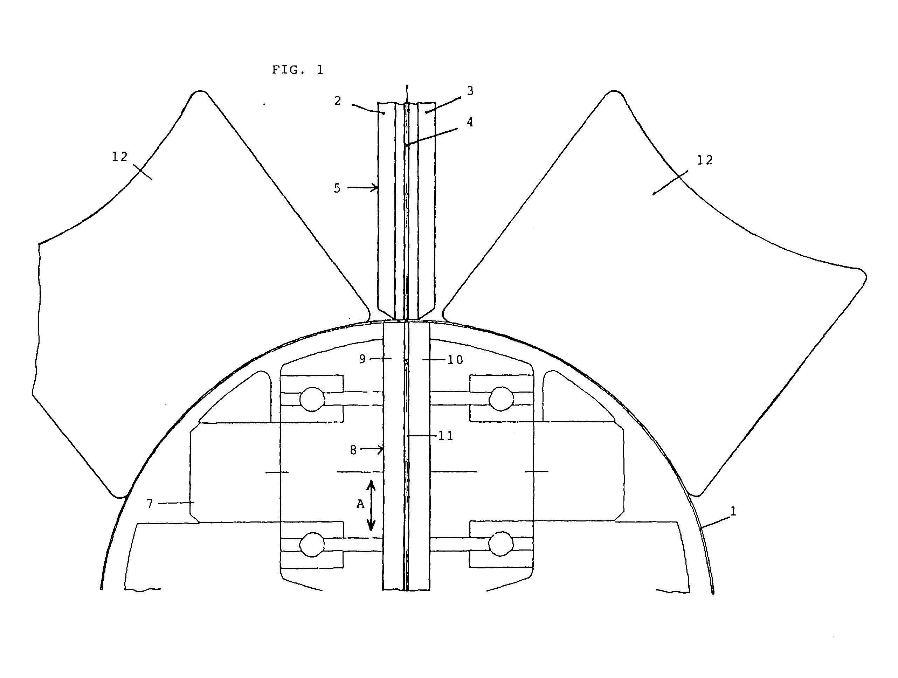

Figur 1 zeigt schematisch eine nur teilweise dargestellte Dosenzarge 1, welche mittels Rollnahtschweissung stumpfgeschweisst wird. Die Rollnahtschweissung erfolgt mittels zweier Elektroden 2 bzw. 3, welche durch eine Isolation 4 voneinander getrennt sind und eine ausserhalb der Zarge angeordnete Schweissrolle 5 bilden. Innerhalb der Zarge 1 ist an einem Tragarm 7 am Unterarm der Rollnahtschweissmaschine eine innere Rolle 8 drehbar gelagert. Diese Rolle 8 ist nicht stromführend. Im dargestellten Beispiel besteht die Rolle 8 aus zwei Scheiben 9 und 10 aus einem harten metallischen Werkstoff und einer mittleren Isolationsschicht 11. Ferner sind ausserhalb der Zarge in an sich bekannter Weise Kalibrierrollen 12 angeordnet, welche die Rundheit der Zarge sicherstellen. Neben den dargestellten Kalibrierrollen 12 sind dabei in der Regel noch weitere, in der Zeichnung nicht ersichtliche Kalibrierrollen entlang des Umfangs der Zarge 1 vorgesehen. Die Zarge wird so zwischen die Schweissrolle 5 und die Gegenrolle 8 geführt, dass sich die Zargenkanten stumpf, nichtüberlappend, gegenüberliegen. Dies kann durch geeignete Führungsschienen (sog. Z-Schienen) erfolgen, welche an sich vom Bilden einer Ueberlappungsnaht her bekannt sind und welche daher hier nicht weiter dargestellt werden, welche aber hier so eingestellt sind, dass sich keine Ueberlappung ergibt, sondern ein stumpfes Aneinanderdrücken der beiden Zargenlängsbereiche. Es ergibt sich dabei eine H-förmige Schiene. Die Führungsschiene kann dabei die Zargenenden so zusammenführen, dass diese auf gleicher Höhe liegen und noch einen geringen Restabstand von z.B. 0,1 mm aufweisen.

Gemäss der Erfindung ist die innere Rolle 8 beweglich gelagert, so dass die Rolle 8 eine Bewegung in vertikaler Richtung ausführen kann, wenn die Zarge 1 zwischen die Rolle 8 und die Rolle 5 eingeschoben wird, was in Figur 1 mit dem Pfeil A angedeutet ist. Die Rolle 8 drückt dabei mit einer einstellbaren Kraft in Richtung auf die starr gelagerte Rolle 5. Diese Kraft kann z.B. durch eine Feder oder pneumatisch aufgebracht werden. Die äussere Rolle 5 ist dabei in der Regel starr gelagert, womit umgekehrte Verhältnisse vorliegen als beim Überlappungsschweissen, wo diese Rolle gefedert gelagert ist. Eine bewegliche, gefederte Lagerung der Rolle 5 ist aber grundsätzlich auch möglich, womit dann beide Rollen beweglich gelagert sind.

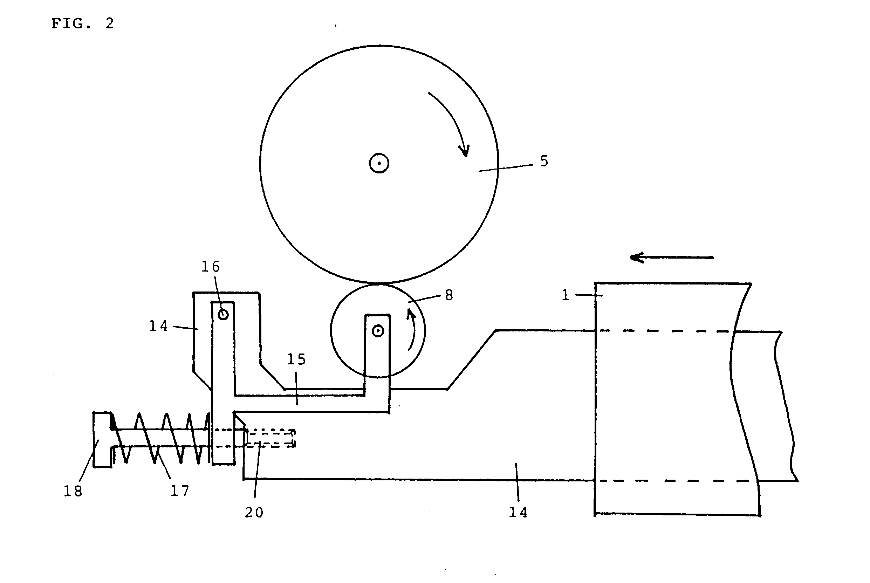

Figur 2 zeigt grob schematisch ein erstes Ausführungsbeispiel der beweglichen Lagerung der inneren Rolle 8. Die äussere Rolle 5 ist maschinenfest und drehbar gelagert, wobei diese Lagerung hier nicht dargestellt ist. Zur beweglichen Lagerung der Rolle 8 ist am herkömmlichen Unterarm 14 der Rollnahtschweissmaschine eine Schwinge 15 angeordnet, welche mit einer Drehachse 16 am maschinenfesten Unterarm angelenkt ist. Die Schwinge 15 ist somit beweglich und trägt die Rolle 8. Damit die Rolle 8 federnd in Richtung der Rolle 5 beaufschlagt ist, ist gemäss Figur 2 eine Druckfeder 17 vorgesehen, die einerends an der Schwinge 15 anliegt und anderends von einem Bolzen 18 mit dessen Bolzenkopf beaufschlagt wird, wobei dieser Bolzen an seinem anderen Ende ein Gewinde 20 aufweist und in den Unterarm 14 eingeschraubt ist. Durch mehr oder weniger weites Einschrauben des Bolzens 18 in den Unterarm 14 kann somit die Federkraft auf die Schwinge 15 bzw. auf die innere Rolle 8 für die Schweissung der Zarge 1 eingestellt werden.

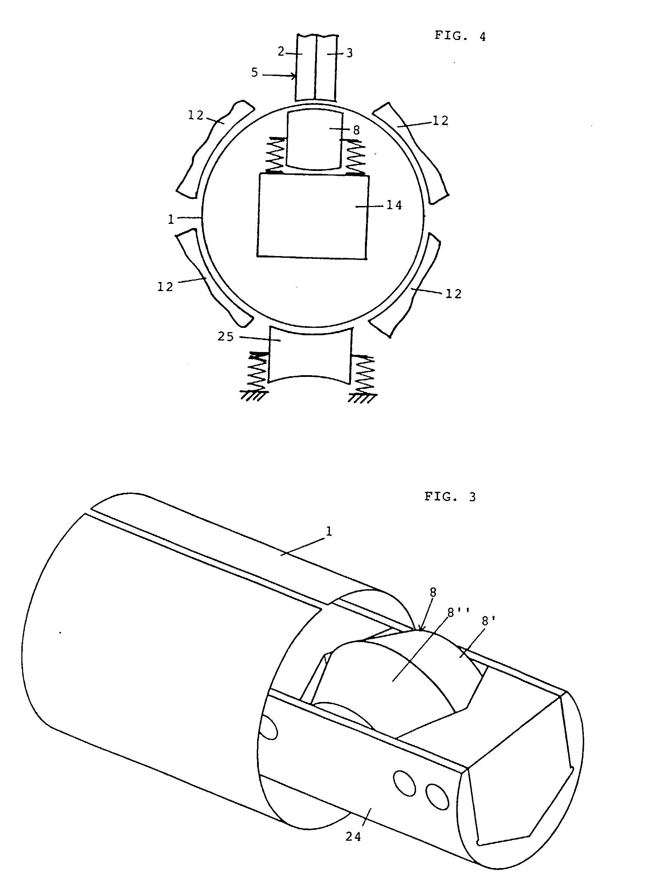

Figur 3 zeigt in perspektivischer Ansicht eine weitere Ausführungsform. Dabei ist nur der Unterarm 24 mit der hier zweiteiligen inneren Rolle 8 gezeigt, die aus den Teilen 8' und 8" besteht. Die bewegliche Lagerung und Federung der Rolle erfolgt bei diesem Beispiel pneumatisch durch eine mit Druckluft von z.B. 6 bar Druck gespiesene Kammer unterhalb der beiden Rollenhälften 8' und 8". Die beiden Rollenhälften können dabei voneinander unabhängige Bewegungen ausführen. Durch eine Aenderung des Luftdruckes kann die Einstellung der Gegenkraft der inneren Rolle 8 erfolgen. Die Aenderung des Luftdruckes kann auch während des Betriebs der Rollnahtschweissmaschine erfolgen und z.B. am Zargenanfang und allenfalls am Zargenende geringer sein als im übrigen Bereich der Zarge 1. Es ergibt sich somit eine Kraftsteuerung der inneren Rolle 8 zur Anpassung von deren Gegenkraft zur äusseren Rolle an die wechselnden Bedingungen beim Schweissen. Die Kraftsteuerung kann natürlich auch elektrisch oder elektromagnetisch erfolgen, wozu eine Anordnung ähnlich derjenigen von Figur 2 verwendet werden kann, wobei z.B. die Federkraft durch die Kraft eines elektrischen Antriebs oder eines Elektromagneten variiert wird, oder wobei die Feder durch einen elektrischen Antrieb oder einen Elektromagneten ersetzt wird. Auf diese Weise kann eine konstante Gegenkraft zur stromführenden Aussenrolle erzeugt werden. Die Kraftsteuerung ermöglicht ferner den Verschleiss im Leerlauf (Anlaufbetrieb ohne Zargen) zu senken, da dabei die Gegenkraft der inneren Rolle reduziert werden kann.

Figur 4 zeigt eine weitere Ausführungsform, bei welcher gleiche Bezugszeichen wie bisher gleiche Teile bezeichnen. Figur 4 zeigt in grob schematischer Form, dass zusätzlich eine Druckrolle 25 ausserhalb der Zarge 1 gegenüberliegend zu den Rollen 5 und 8 vorgesehen ist. Diese Rolle 25 ist gefedert und sorgt mit ihrer Federkraft für eine symmetrische Belastung der Stumpfnaht.

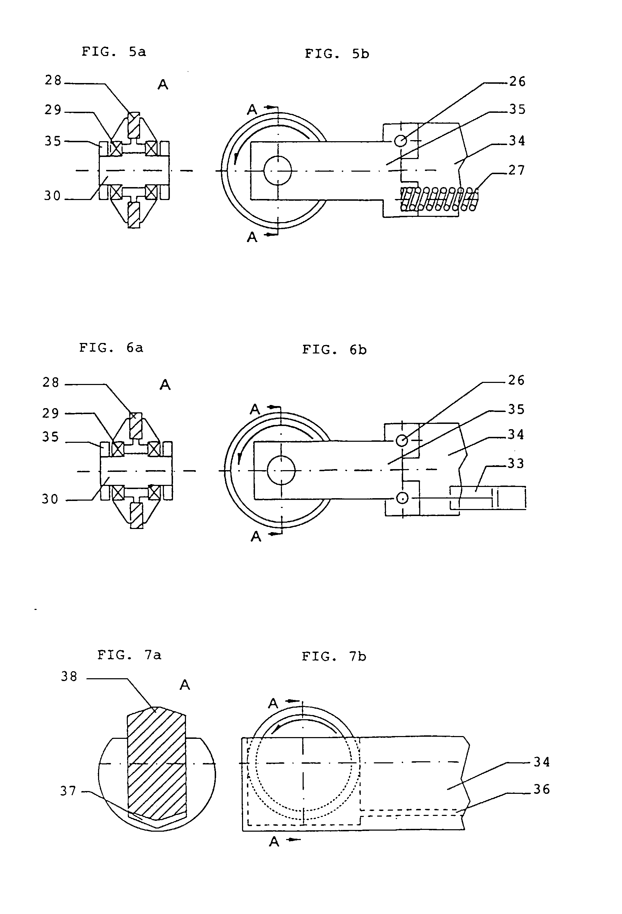

Figur 5a und Figur 5b zeigen eine weitere Ausführungsform in Seitenansicht bzw. in Schnittansicht entlang der Linie A-A. Am Arm 34 ist dabei eine Schwinge 35 um den Drehpunkt 26 mittels der Druckfeder 27 gefedert beweglich gelagert. Die Schwinge 35 trägt die Achse 30, an welcher Lager 29 und die Innenrolle 28 angeordnet sind.

Die Figuren 6a und 6b zeigen eine ähnliche Ausführungsform wie die Figuren 5a, 5b, wobei gleiche Bezugszeichen gleiche Teile bezeichnen. Die Federkraft wird mit einer pneumatischen Zylinder/Kolbenanordnung 33 erzeugt.

Die Figuren 7a und 7b zeigen eine pneumatisch gefederte Innenrolle 38, wobei am Arm 34 eine Druckluftzuführung 36 vorgesehen ist, die ein Druckluftkissen 37 unterhalb der Rolle 38 bildet.

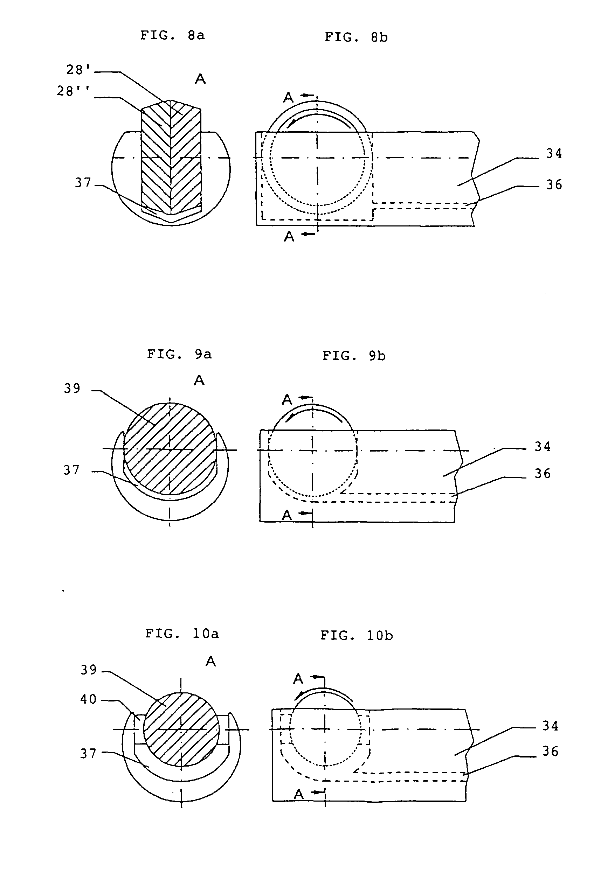

Die Figuren 8a und 8b zeigen eine Ausführungsform ähnlich derjenigen der Figuren 7a, 7b, wobei eine zweiteilige Rolle mit den Teilen 28' und 28" vorgesehen ist.

Die Figuren 9a und 9b zeigen eine Ausführungsform mit einer pneumatisch gefederten kugelförmigen Innenrolle 39. Diese Ausführung ergibt geringeren Verschleiss der Innenrolle. Die Ausführung gemäss den Figuren 10a, 10b weist zusätzlich einen Gleitring 40 für die Kugel 39 auf.

## Patentansprüche

1. Verfahren zum Rollnahtschweissen von Behälterzargen aus Feinblech, vorzugsweise Weissblech, dadurch gekennzeichnet, dass die Zargenlängsbereiche stumpf aneinanderliegend verschweisst werden, wobei die Zarge (1) zwischen einer stromführenden äusseren Rolle (5) und einer beweglich gelagerten, nicht-stromführenden inneren Rolle (8, 8', 28, 28' 28", 38, 39) hindurchgeführt wird, wobei die innere Rolle (8) mit einer vorbestimmten Kraft gegen die äussere Rolle (5) gedrückt wird.

2. Verfahren zum Rollnahtschweissen von Behälterzargen aus Feinblech, dadurch gekennzeichnet, dass die Zargenlängsbereiche überlappend verschweisst werden, wobei die Zarge (1) zwischen einer stromführenden äusseren Rolle und einer stromführenden, beweglich gelagerten inneren Rolle hindurchgeführt wird, wobei die innere Rolle mit einer vorbestimmten Kraft gegen die äussere Rolle gedrückt wird.

3. Verfahren nach einem der Ansprüche 1 oder 2, dadurch gekennzeichnet, dass die Andruckkraft der inneren Rolle einstellbar und während des Schweissbetriebs konstant ist.

4. Verfahren nach einem der Ansprüche 1 oder 2, dadurch gekennzeichnet, dass die Andruckkraft der inneren Rolle einstellbar und während des Schweissbetriebs veränderbar ist.

5. Verfahren nach einem der Ansprüche 1 bis 4, dadurch gekennzeichnet, dass die Zarge in dem dem Schweissbereich gegenüberliegenden Bereich von aussen mit einer Federkraft beaufschlagt wird.

6. Vorrichtung zum Rollnahtschweissen von Behälterzargen aus Feinblech, vorzugsweise Weissblech, gekennzeichnet durch eine zwei Elektroden (2,3) aufweisende äussere Schweissrolle (5) und eine beweglich gelagerte, nicht-stromführende und mit einem vorbestimmten Anpressdruck gegen die äussere Rolle gedrückte innere Rolle (8, 8', 8'', 28, 28', 28", 38, 39), zwischen welchen Rollen die zu schweissende Zarge (1) im Stumpfstoss zuführbar ist.

7. Vorrichtung zum Rollnahtschweissen von Behälterzargen aus Feinblech, gekennzeichnet durch eine stromführende äussere Schweissrolle und eine stromführende, beweglich gelagerte und mit einem vorbestimmten Anpressdruck gegen die äussere Rolle gedrückte innere Rolle, zwischen welchen Rollen die zu schweissende Zarge zur Bildung einer Ueberlappnaht zuführbar ist.

8. Vorrichtung nach einem der Ansprüche 6 oder 7, dadurch gekennzeichnet, dass die innere Rolle durch eine Feder (17) mit wählbarer Kraft gegen die äussere Rolle (5) pressbar ist.

9. Vorrichtung nach Anspruch 8, dadurch gekennzeichnet, dass die innere Rolle an einer gefederten Schwinge (15) gelagert ist, welche drehbar am Unterarm (14) der Rollnahtschweissmaschine gelagert ist.

10. Vorrichtung nach einem der Ansprüche 6 oder 7, dadurch gekennzeichnet, dass die innere Rolle pneumatisch gelagert und gegen die äussere Rolle pressbar ist.

11. Vorrichtung nach einem der Ansprüche 6 bis 10, dadurch gekennzeichnet, dass ein steuer- oder regelbares Antriebselement vorgesehen ist, durch welches der Anpressdruck der inneren Rolle beeinflussbar ist.

12. Vorrichtung nach Anspruch 6, dadurch gekennzeichnet, dass die innere Rolle aus Keramikmaterial gebildet ist.

13. Vorrichtung nach einem der Ansprüche 6 bis 12, dadurch gekennzeichnet, dass die innere Rolle aus zwei Teilen (8', 8''; 28', 28") besteht, die unabhängig voneinander gelagert sind.

14. Vorrichtung nach einem der Ansprüche 6 bis 13, dadurch gekennzeichnet, dass die innere Rolle (39) kugelförmig ist.

15. Vorrichtung nach einem der Ansprüche 6 bis 14, dadurch gekennzeichnet, dass die äussere Rolle (5) starr gelagert ist.

16. Vorrichtung nach einem der Ansprüche 6 bis 15, dadurch gekennzeichnet, dass gegenüberliegend zu der inneren und äusseren Rolle (8, 5) eine gefedert gehaltene Druckrolle (25) vorgesehen ist.

## Claims

1. Method for the seam welding of container bodies of thin, preferably tinned, sheet, characterized in that the longitudinal margins of the body (1) are welded edge to edge without overlap, the body being guided between a current-carrying outer roller (5) and a movably mounted, non-current-carrying inner roller (8, 8', 28, 28', 28", 38, 39), the inner roller (8) being pressed against the outer roller (5) with a predetermined force.

2. Method for the seam welding of container bodies of thin sheet, characterized in that the longitudinal margins of the body (1) are welded with an overlap, the body being guided between a current-carrying outer roller and a current-carrying, movably mounted inner roller, the inner roller being pressed against the outer roller with a predetermined force.

3. Method according to Claim 1 or 2, characterized in that the pressure of the inner roller is adjustable, and is constant during the welding operation.

4. Method according to Claim 1 or 2, characterized in that the pressure of the inner roller is adjustable, and can be varied during the welding operation.

5. Method according to any one of Claims 1 to 4, characterized in that the body is acted on by an external spring force in the region opposite the welding zone.

6. Apparatus for the seam welding of container bodies of thin, preferably tinned, sheet, characterized by an outer welding roller (5) with two electrodes (2, 3) and a movably mounted, non-current-carrying inner roller (8, 8', 8", 28, 28', 28", 38, 39) pressed against the outer roller with predetermined pressure, the body (1) for welding being guidable between the said rollers with its edges butted together without overlap.

7. Apparatus for the seam welding of container bodies of thin sheet, characterized by a current-carrying outer welding roller and a current-carrying, movably mounted inner roller which is pressed against the outer roller with predetermined pressure, the body for welding being guidable between the said rollers to form an overlapping seam.

8. Apparatus according to Claim 6 or 7, characterized in that the inner roller can be pressed by a spring (17) with selectable force against the outer roller (5).

9. Apparatus according to Claim 8, characterized in that the inner roller is mounted on a sprung rocker (15) which is pivotably mounted on the lower arm (14) of the seam welding machine.

10. Apparatus according to Claim 6 or 7, characterized in that the inner roller is pneumatically mounted and pressable against the outer roller.

11. Apparatus according to any one of Claims 6 to 10, characterized in that a controllable or adjustable actuating element is provided by means of which the pressure of the inner roller can be varied.

12. Apparatus according to Claim 6, characterized in that the inner roller is formed from ceramic material.

13. Apparatus according to any one of Claims 6 to 12, characterized in that the inner roller consists of two parts (8', 8"; 28', 28") mounted independently of one another.

14. Apparatus according to any one of Claims 6 to 13, characterized in that the inner roller (39) is spherical.

15. Apparatus according to any one of Claims 6 to 14, characterized in that the outer roller (15) is rigidly mounted.

16. Apparatus according to any one of Claims 6 to 15, characterized in that a spring-mounted pressure roller (25) is provided opposite the inner and outer rollers (8, 5).

## Revendications

1. Procédé de soudage à la molette de récipients en forme de corps de boîte en tôle mince, de préférence en fer blanc, caractérisé en ce qu'on soude en bout l'une contre l'autre les parties longitudinales du corps de boîte, le corps de boîte (1) étant guidée entre une molette extérieure (5) qui véhicule le courant et une molette intérieure (8,8',28,28', 28",38,39) qui est montée de manière à être déplaçable et ne véhicule pas le courant, la molette intérieure (8) étant repoussée contre la molette extérieure (5) avec une force prédéterminée.

2. Procédé pour le soudage à la molette de récipients en forme de corps de boîte en tôle mince, caractérisé en ce qu'on soude en chevauchement les parties longitudinales du corps de boîte, le corps de boîte (1) étant guidé entre une molette extérieure, qui véhicule le courant, et une molette intérieure montée de manière à être déplaçable et qui véhicule le courant, la molette intérieure étant repoussée contre la molette extérieure avec une force prédéterminée.

3. Procédé selon l'une des revendications 1 ou 2, caractérisé en ce que la force de serrage de la molette intérieure est réglable et est constante pendant l'opération de soudage.

4. Procédé selon l'une des revendications 1 ou 2, caractérisé en ce que la force de serrage du rouleau intérieur est réglable et est modifiable pendant l'opération de soudage.

5. Procédé selon l'une des revendications 1 à 4, caractérisé en ce que le corps de boîte est chargé de l'extérieur par la force d'un ressort, dans la zone située à l'opposé de la zone de soudage.

6. Dispositif pour le soudage à la molette de récipients en forme de corps de boîte en tôle mince, de préférence en fer blanc, caractérisé par une molette extérieure de soudage (5), qui comporte deux électrodes (2,3), et une molette intérieure (8,8',8",28,28',28",38,39), qui est montée de manière à être déplaçable, ne conduit pas le courant et est repoussée contre la molette intérieure avec une pression de serrage prédéterminée, le corps de boîte à souder (1) pouvant être amené en aboutement entre les molettes.

7. Dispositif pour le soudage à la molette de récipients en forme de corps de boîte en tôle mince, caractérisé par une molette extérieure de soudage, qui véhicule le courant, une molette intérieure, qui véhicule le courant, est montée de manière à être déplaçable et est repoussée contre la molette extérieure avec une pression de serrage prédéterminée, le corps de boîte à souder pouvant être amené pour la formation d'un joint en chevauchement, entre les molettes.

8. Dispositif selon l'une des revendications 6 ou 7, caractérisé en ce que la molette intérieure peut être repoussée contre la molette extérieure (5) par un ressort (17) avec une force pouvant être présélectionnée.

9. Dispositif selon la revendication 8, caractérisé en ce que la molette intérieure est montée sur un bras oscillant suspendu (15), qui est monté de manière à pouvoir pivoter sur le bras inférieur (14) de la machine de soudage à la molette.

10. Dispositif selon la revendication 6 ou 7, caractérisé en ce que la molette intérieure est montée pneumatiquement et peut être repoussée contre la molette extérieure.

11. Dispositif selon l'une des revendications 6 à 10, caractérisé en ce qu'il est prévu un élément d'entraînement commandable ou réglable, au moyen duquel on peut influer sur la pression de serrage de la molette intérieure.

12. Dispositif selon la revendication 6, caractérisé en ce que la molette intérieure est formée d'un matériau céramique.

13. Dispositif selon la revendication 6 à 12, caractérisé en ce que la molette intérieure est formée de deux parties (8',8";28',28") qui sont tourillonnées indépendamment l'une de l'autre.

14. Dispositif selon l'une des revendications 6 à 13, caractérisé en ce que la molette intérieure (39) possède une forme sphérique.

15. Dispositif selon l'une des revendications 6 à 14, caractérisé en ce que la molette extérieure (5) est tourillonnée d'une manière rigide.

16. Dispositif selon l'une des revendications 6 à 15, caractérisé en ce qu'un galet de pression (25) monté sur ressort est disposé en vis-à-vis des molettes intérieure et extérieure (8,5).
